# EUROPEAN PATENT SPECIFICATION

(11) **EP 0 628 252 B1**
(45) Date of publication and mention of the grant of the patent: **23.12.1998**
(21) Application number: 94201647.8
(22) Date of filing: 09.06.1994
(51) Int. Cl.: A23B 4/03, A23B 4/052, A23L 3/40

(54) **Plant for the treatment of products, particularly foodstuffs, in a ventilated chamber, and relative method**
Verfahren und Einrichtung zur Behandlung von Produkten, insbesondere Nahrungsprodukten, in einem ventilierten Zimmer
Procédé et installation de traitement de produits, en particulier de produits alimentaires, dans une chambre ventilée

(30) Priority: 11.06.1993 IT MO930079
(43) Date of publication of application: 14.12.1994
(73) Proprietor: FRIGOMECCANICA S.p.A., I-43038 Sala Baganza (Parma) (IT); TEIKOS S.r.l., I-41100 Modena (IT); VERKOS FRIGO S.r.l., I-42035 Castelnovo ne'Monti (IT)
(72) Inventor: Remedi, Renato, I-43038 Sala Baganza (Parma) (IT); Lusenti, Oddino, I-42035 Castelnovo ne' Monti (IT); Filippi, Alessandra, I-41058 Vignola (Modena) (IT)
(74) Representative: Modiano, Guido, Dr.-Ing.

(56) References cited:
- EP-A- 0 449 388
- DE-A- 3 617 345
- FR-A- 1 484 923
- US-A- 4 310 020
- US-A- 4 409 743

## Description

The invention concerns a plant for the treatment of products, particularly foodstuffs such as preserved meats, in a ventilated chamber, i. e. an assembly of devices designed to subject edible products in particular to processing such as cooking, drying, curing and the like.

The prior art involves treatment plants comprising chambers or cells or areas in general in which the products, arranged on hangers suspended from guide-rails or on trolleys, are bathed in a current of air ducted at controlled pressure, flow-rate and temperature in order to obtain the required treatment.

The hangers, or the trolleys, are distributed in a plurality of longitudinal rows with, or without, a central gangway and a pair of lateral gangways adjacent to the walls on which the said conduits are mounted with diffusers directed towards the centre of the chamber so that the air converges towards the centre of the chamber and flows upwards in the central gangway towards one or more longitudinal extraction conduits located near the ceiling.

Alternatively, the diffusers may be mounted on the ceiling, extraction occurring at floor level.

It so happens, for example during the drying of sausages, that the products nearest to the air diffusers, for example those next to the gangways, are already dry when the products farthest away are still moist; from which follows that the continuation of treatment to complete the drying of the latter makes for the excessive drying, and hence deterioration in quality, of the former.

Furthermore, the presence of the gangways leads to a waste of space with consequent increase in costs per mass unit of treated product.

Also, the critical height of each cell is limited to 2.5-3 m, given the progressive increase in the humidity of the air towards the extraction conduits and the consequent progressive reduction in drying capacity, which leads to a less than optimum exploitation of the available space in the production plant.

Finally, processing the products in reduced batches, that is, in insufficient quantity to completely fill a single cell, is somewhat problematical: this, owing to the imbalance in the distribution of the air flow inside the cell induced by the presence of large areas not occupied by product and in which the greater part of the circulation of air is concentrated, to the detriment of the areas in which the product is concentrated, where a greater circulation is called for; furthermore, this makes for difficulties in the repeatability of results obtained in one and the same cell with varying loads.

A plant having the features comprised in the preamble of claim 1, is known from EP-A-449 388.

An alternative example of plant is disclosed in FR-A-1.484.923.

Such prior art may be subject to further improvement with a view to eliminating the its drawbacks.

From the foregoing emerges the need to resolve the technical problem of inventing a treatment plant, in particular for foodstuffs in a cell with forced circulation of conditioned air, or other processing fluid, in which the uniformity of treatment of the products is notably increased irrespective of their position within the treatment chamber; having, further, to design a plant capable of optimizing the exploitation of the space in each chamber so as to achieve optimum processing even in the case of partial loading; the whole being safe, reliable and cost-effective.

In one particularly advantageous version, the invention resolves the said technical problem by adopting a treatment plant for food products in general, defined by a combinatio of features as set forth in claim 1.

According to a further version, the products to be treated being supported on mobile conveyor frames, such as trolleys, or hangers suspended form rails fixed to the ceiling, distributed uniformly over the whole area of the chamber, or a part of it; the conveyors constituting one of the end rows of said formation being fitted with panels, mounted removably on the said frames, the whole constituting a transverse dividing wall in the treatment chamber.

The advantages offered by the invention are: greater uniformity in the treatment of the products, irrespective of the disposition, be it transverse or longitudinal, or height of said products; more rational exploitation of said space, achieved both by the absence of lateral or central gangways in the chamber and by the possibility of having taller chambers; optimum treatment of the products, even with reduced loads; greater reliability; reduction in energy costs because of the optimum exploitation of the air flows directed selectively to the area in which the product is present.

The invention is characterised by further advantageous versions of the plant according to the invention, as specified in the claims.

Some embodiments of the invention are illustrated, by way of example, in the eighteen tables of drawings attached, in which:

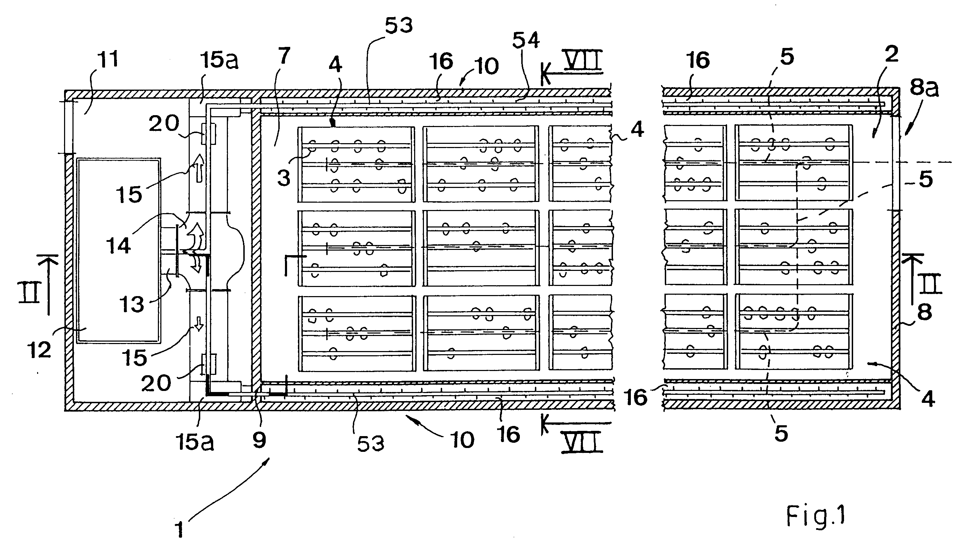

Figure 1 is a plan view of a plant according to the invention, in the version with the air conditioner at the back of the treatment chamber;
Figure 2 is the stepped longitudinal section II-II of Figure 1;

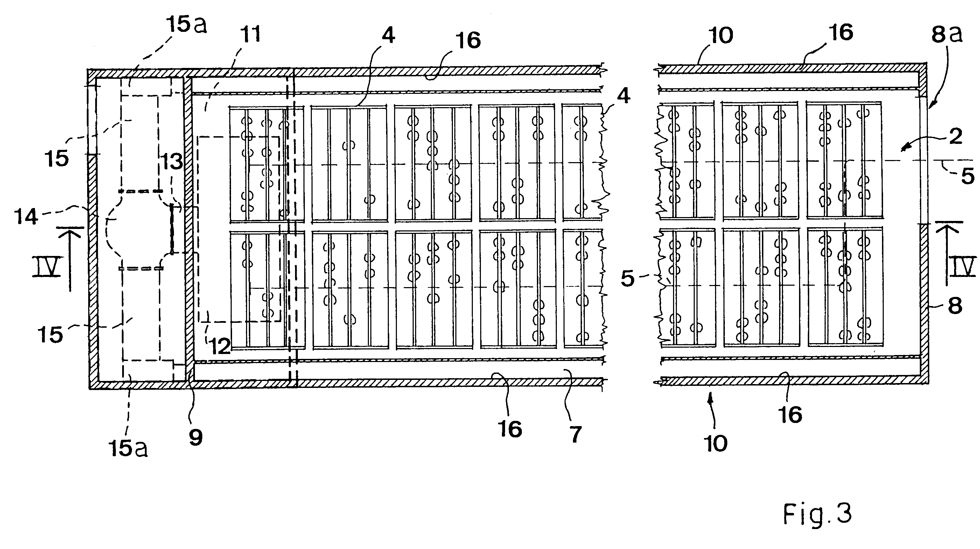

Figure 3 is a plan view as in Figure 1, but in the version with the conditioner above the ceiling of the treatment chamber;

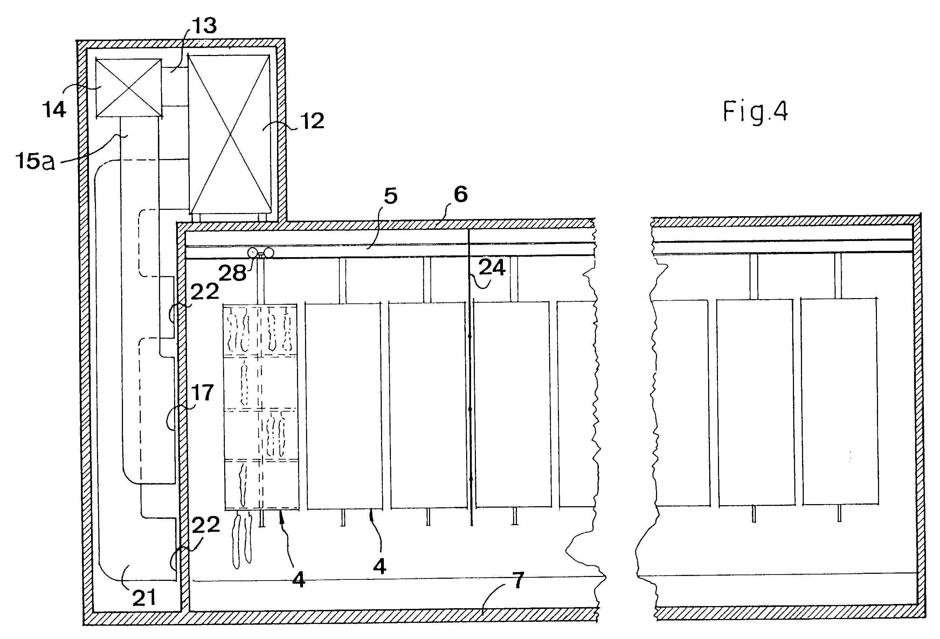

Figure 4 is the longitudinal section IV-IV of Figure 3;

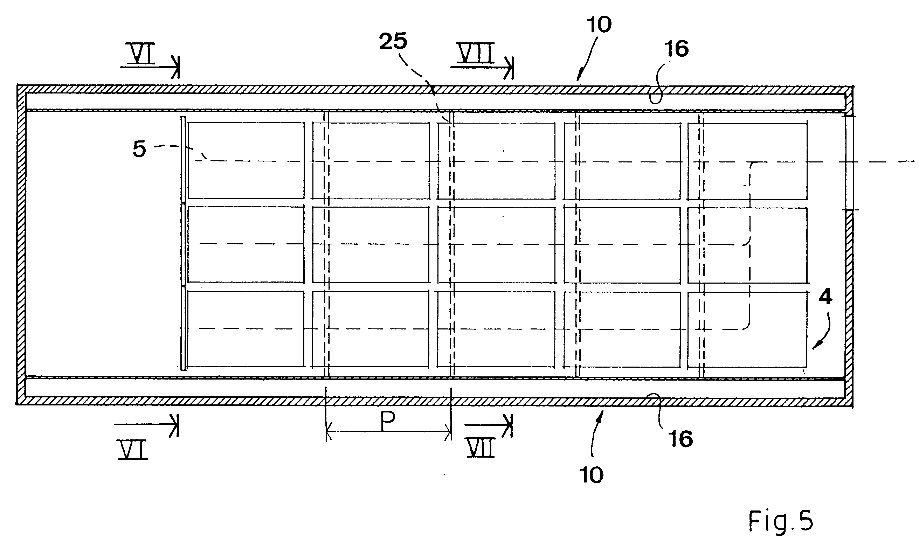

Figure 5 is a plan view as in Figure 1, but in the version with modular transverse baffles for reducing the effective volume of the treatment chamber;
Figure 6 is the transverse section VI-VI of Figure 5;
Figure 7 is the transverse section VII-VII of Figure 1;

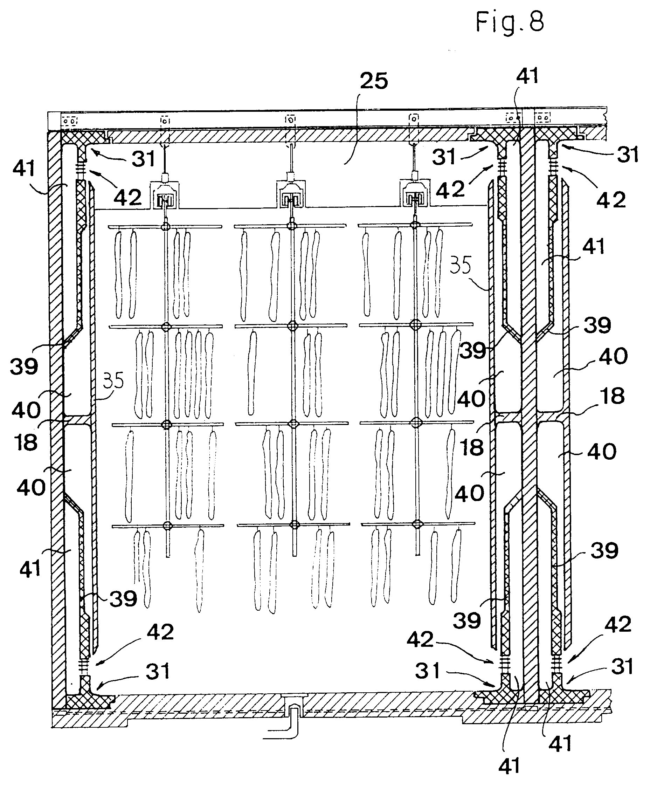

Figure 8 is the transverse section VIII-VIII of Figure 5;

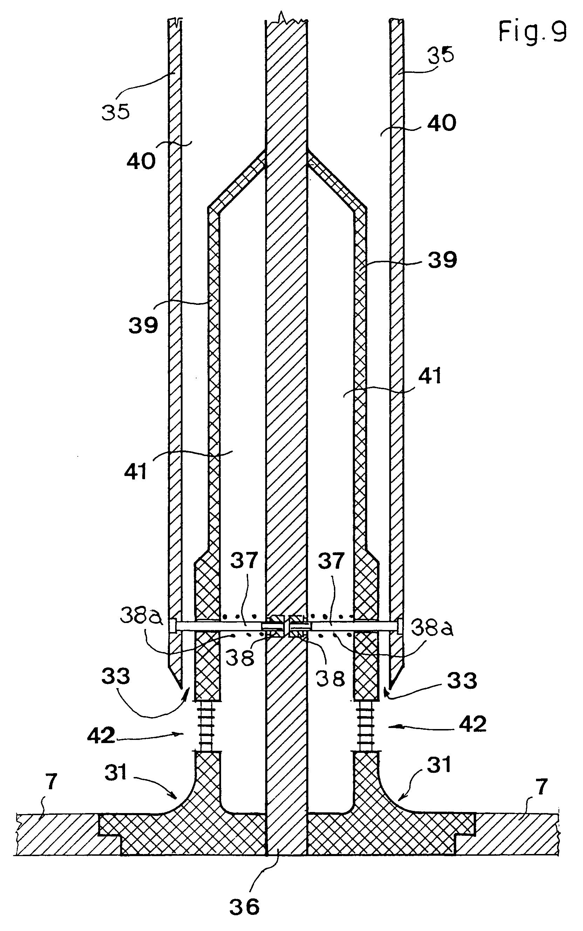

Figure 9 is an enlarged cross-section, of the lower extremity of a dividing wall between adjacent chambers to show the conduits for the introduction of processing fluid and extraction of air alternately, after the product has traversed the portion in question of the chamber, in the version with four pairs of conduits for the distribution of air;

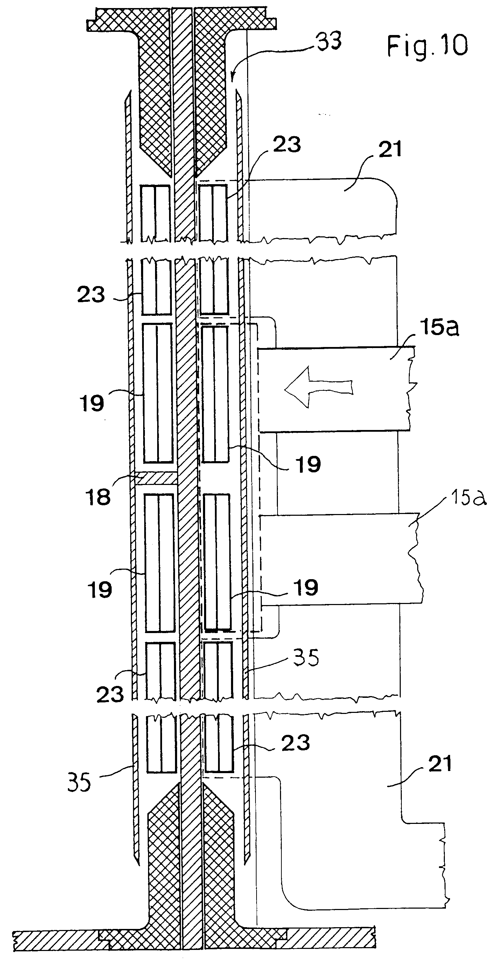

Figure 10 is the transverse section of a dividing wall between adjacent chambers, but, in the version with two pairs of conduits, showing the gate valves of the conduits;

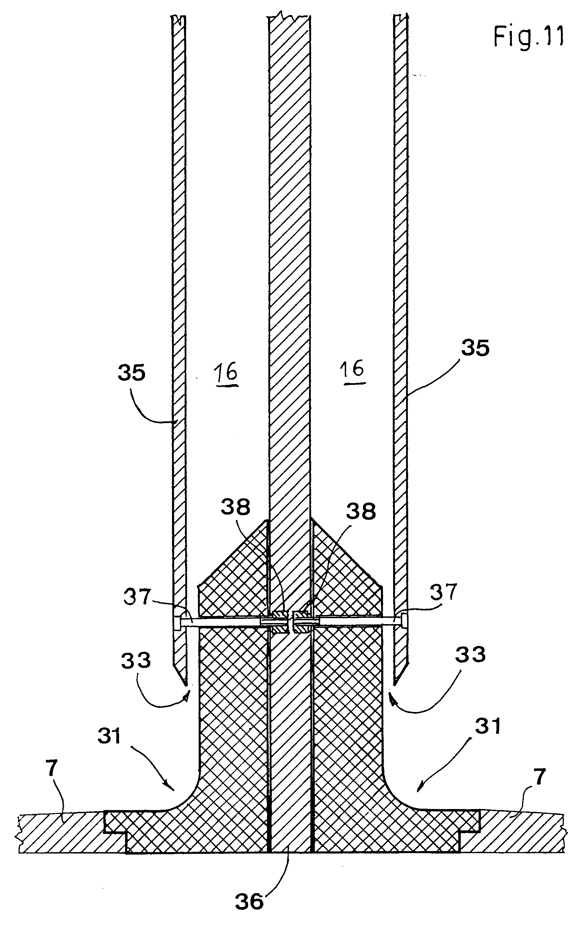

Figure 11 is an enlarged detail as in Figure 9, but, in the version with two pairs of conduits;
Figure 12 is the transverse section of the ends of a side wall, in the version with truncated-cone diffusers and a couple of air distribution conduits partially encased;
Figure 13 is a section as in Figure 12, but, without extraction conduits;
Figure 14 is a section as in Figure 12, however, in the version with externally mounted extraction conduits;

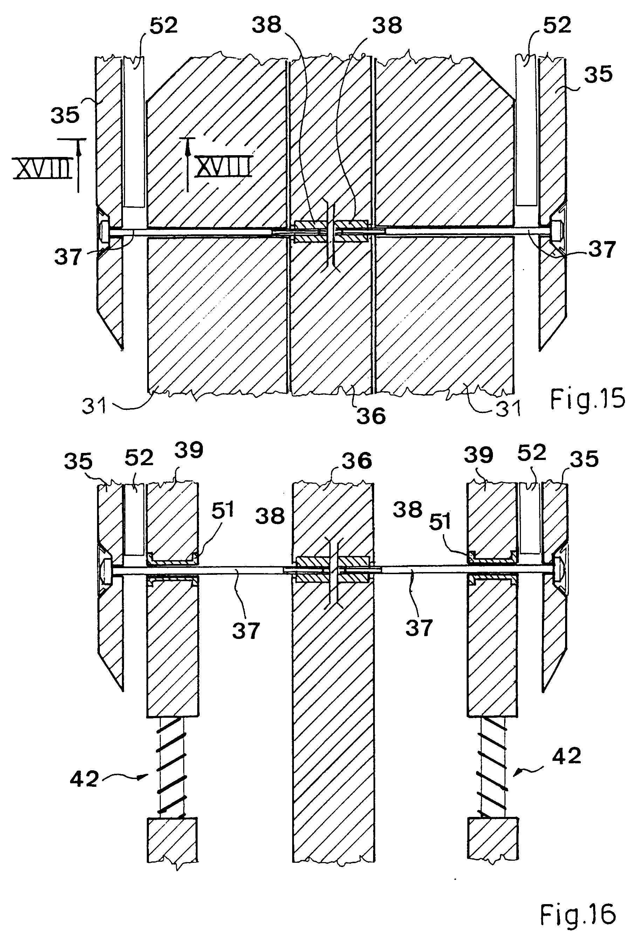

Figure 15 is an enlarged partial cross-section of the device for the regulation of the air distribution section, in the version with two pairs of conduits;
Figure 16 is a detail as in Figure 15, but, in the version with four pairs of conduits;

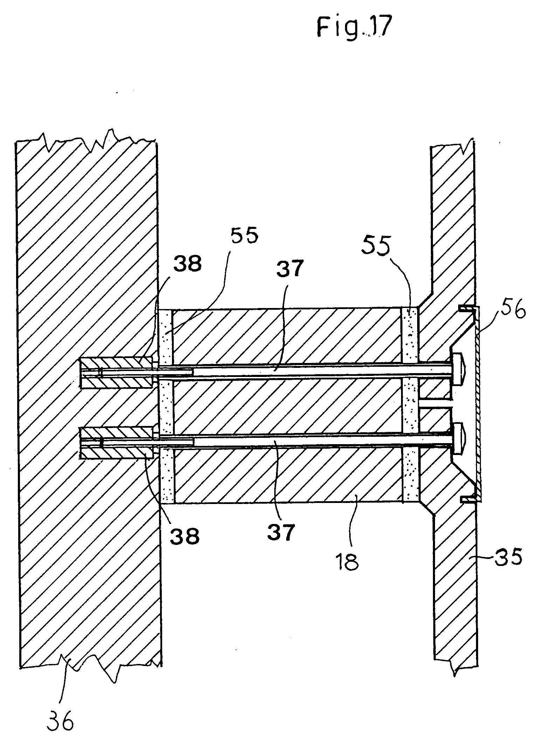

Figure 17 is an enlarged partial cross-section, of the central coupling joint of an internal side wall of the treatment chamber;

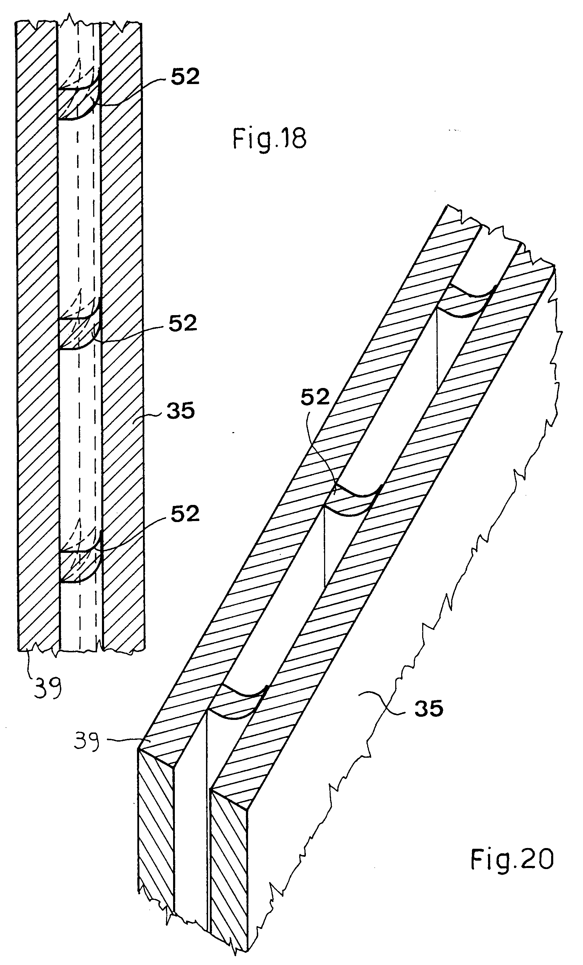

Figure 18 is the longitudinal section XVIII-XVIII of Figure 15, in the version with flexible elements for straightening the fluid threads;
Figure 19 is a section as in Figure 18, but, in the version with rigid straightening elements;

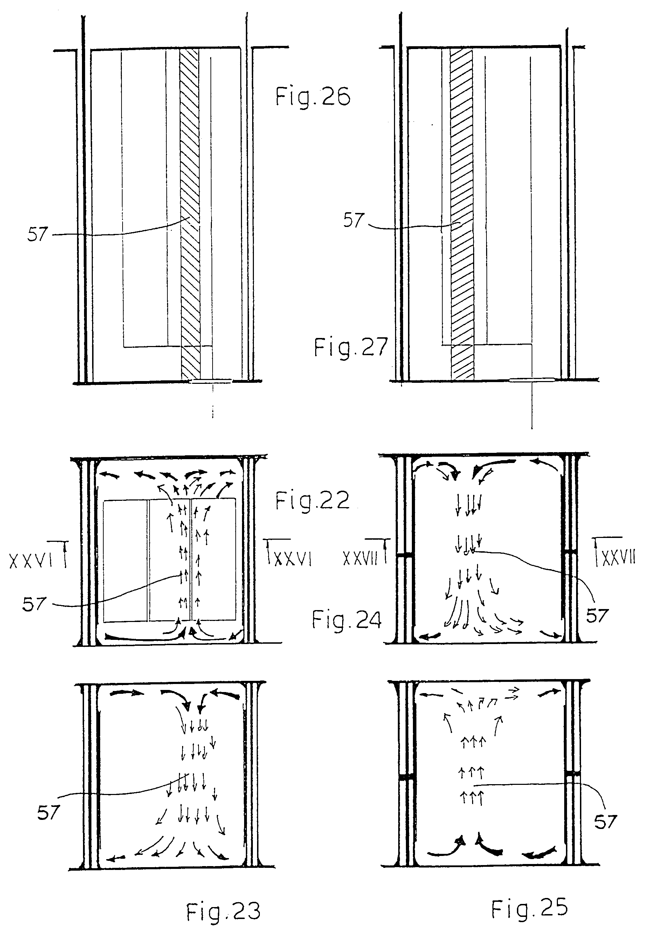

Figures 20 and 21 are the perspective views, respectively, of Figures 18 and 19;
Figures 22 and 23 are schematic, vertical, transverse sections of a treatment chamber, with the longitudinal airflow ascending and descending respectively, and with the impact zone between the opposing flows shifted to the right;
Figures 24 and 25 are sections as in Figures 22 and 23, but with the impact zone shifted to the left;
Figures 26 and 27 are the horizontal, longitudinal sections XXVI-XXVI, XVII-XVII, respectively, of Figure 22 and Figure 23.

The figures show: 1, the plant 1 for the circulation of a gaseous fluid in the chamber 2 for the treatment of products 3, for example, sausages to be dried, cured, cooked or preserved. The gaseous fluid may be made up of air, water vapour, mixtures of nitrogen, carbon dioxide or other gases having controlled temperature and humidity to make the atmosphere of the chamber 2 suitable for drying, humidifying, preserving or other.

Further, a predetermined quantity of aromas in the gaseous state, for example aromatic or non-aromatic smoke, may be added to the gaseous fluid.

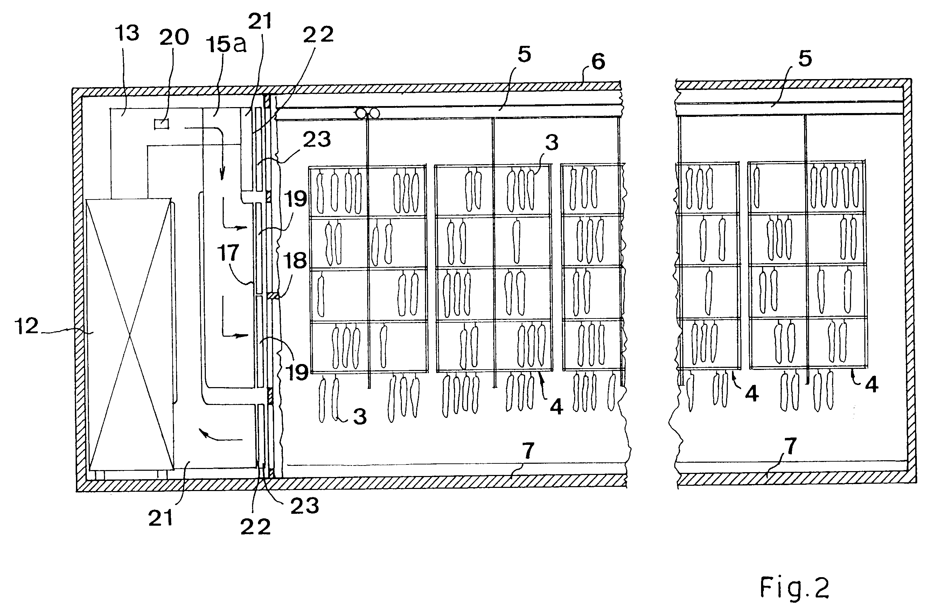

The products 3 are carried on conveyor frames 4, for example, hangers suspended from guide-rails 5 mounted on the ceiling 6 (Figure 2) of the chamber 2, trolleys resting on the floor 7, or fixed shelving, the latter not shown.

The chamber 2 comprises a front end-wall 8, generally including an access door 8a, back end-wall 9 and a pair of side walls 10, the latter being furnished with conduits, described below, for the circulation of the fluid; the walls, and also the ceiling and floor, being insulated.

Beyond the back wall 9 there may also be a machine chamber 11, accessible, for example, from the rear for the maintenance or the regulation of a conditioner 12 of the processing fluid, installed in said chamber, comprising, for example, a refrigerator, heater and humidifier of the processing fluid, as well as a fan for the propulsion of the fluid; the delivery conduit 13 is coupled to a fluid-flow distributor 14 for the delivery of said fluid, in controlled proportions that are gradually variable in accordance with a time cycle, through the opposing fluid-feed conduits 15, and a pair of vertical manifolds 15a, at the open lower extremities of the cavities 16 of the walls 10: the regulation of the flow in the predetermined proportions is achieved by means of an oscillating butterfly valve, having a vertical axis, not shown, inserted in the distributor 14. The manifolds 15a are equipped with an outlet 17, substantially central with respect to the height of the chamber 2, astride a longitudinal baffle plate 18 subdividing each cavity 16 into an upper and lower part: the length of the outlet 17 facing each part of the cavity 16 is coupled to it by a gate valve 19, the degree of opening of which is controlled in a cyclical manner.

A battery 20 of ultraviolet lamps may be inserted inside the conduits 13, or 15, for the sterilising of the processing fluid.

The conditioner 12 may be freely aspirated, if the machine chamber 11 can be hermetically sealed, or canalized, as in Figure 2, when it uses the intake conduits 21 having intakes 22 situated near the floor 7 and the ceiling 6 opposite the outlet of the manifold 15a, and coupled to the relative cavities 16 by means of gate valves 23.

The gate valves 19, 23 may be of the type with a single butterfly valve, or with a series of butterfly valves in line, equi- or contra-rotating, or with deflection valves, not shown; the whole working automatically.

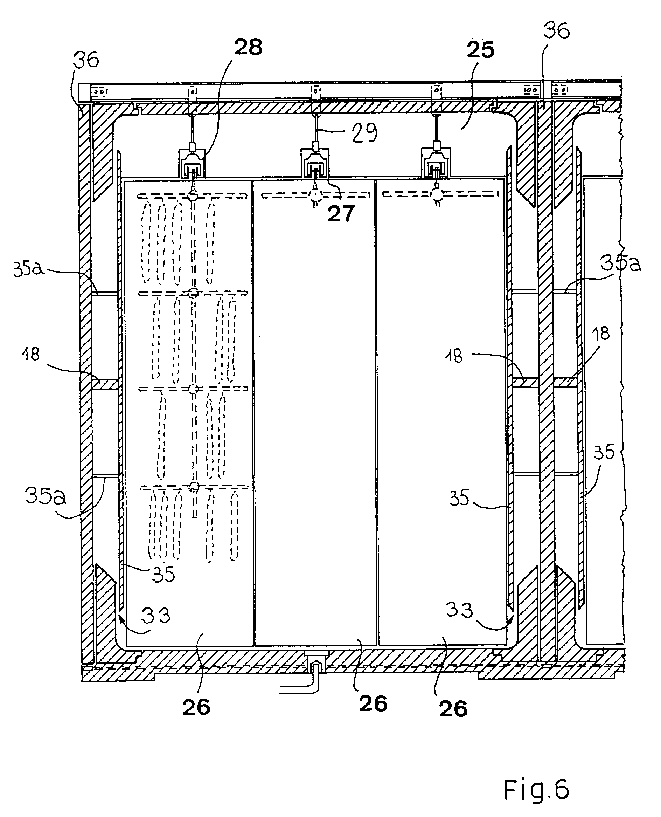

The figures also show: 24, a probe to measure the temperature and humidity values in the chamber 2 for the control of the processing fluid; 25, a plurality of transverse diaphragms protruding downwards from the ceiling 6 of the chamber 2 far enough to just clear the maximum load height of the trolleys, or the topmost hangers 4, for example to the level of the rails 5: said diaphragms being distributed at longitudinal intervals P substantially equivalent to the length of the trolleys, or hangers 4, so that they can be aligned with the panels 26 (Figure 6), moveably or removably fixed to the trolleys or hangers 4 making up the back row of the batch loaded in the chamber 2, so as to form a dismantlable transverse wall and so reduce the effective volume of the chamber itself, when working at part load, thereby maintaining the optimum parameters of relative velocity of the fluid with respect to the product in all sections of the chamber 2; 27, the cutout sections in the diaphragms 25 coinciding with the rolling device 28 of the hangers on the guide-rails 5; 29, the tie-rods of the guide-rails 5, anchored to the crossbeams 30 above, or to the ceiling.

The corners between lateral walls 10 and floor 7 or ceiling 6 featuring connecting elements 31, inserted in the cavities 16 and having an internal surface 32 converging towards the longitudinal apertures 33 for the passage through them of the processing fluid; the areas for the passage of the processing fluid being for example made up of longitudinal slits extending substantially for the entire length of the lateral walls 10: the connecting elements 31 having an ample internal rounded surface with a radius of curvature of between about 20 cm and 40 cm, to deflect the stream of fluid flowing out of the apertures 33, or being extracted towards them, with limited loss; 34, a trap for liquids on the floor 7 for the collection and discharge of liquids.

The lateral walls 10 are finished internally with longitudinal panels 35 fixed to the baffle plate 18 and to the load-bearing wall 36 by means, for example, of spacers 35a, to define the transverse width of the cavities 16.

The extremities of each panel are partially superimposed on the body of each corner block 31 in such a way as to define the width of the aperture 33 for the passage of the fluid, being adjustable by means of the threaded ties 37 engaging internally in bushes 38 inserted in the load-bearing structure 36 and possibly counter-sprung by springs 38a.

The cavities 16 may be longitudinally subdivided by means of intermediate baffles 39 so as to define, in each upper and lower part of said cavities, separate inlet conduits 40, located centrally and extraction conduits 41 located at floor and ceiling level: in this case, the profile of the intermediate baffles 39 continues into the body of the connecting elements 31 forming an integral part of it so as to form an inlet conduit converging towards apertures 33 with acceleration of the stream of fluid where it flows in; 42, longitudinal apertures similar to apertures 33 but placed lower than them, protected by grills to convey the air towards the extraction conduits 41.

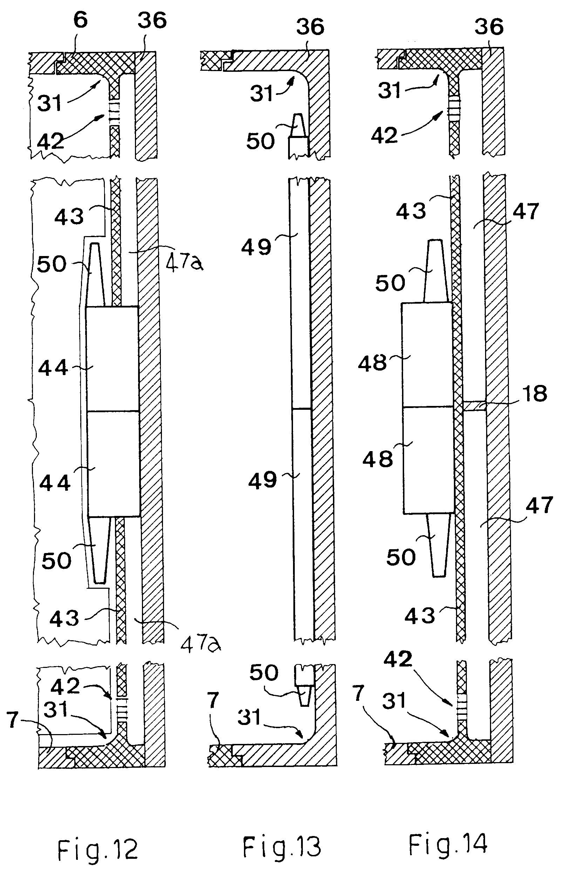

In the version in Figure 12, there are longitudinal panels 43 extending from the ceiling 6 to the floor 7, interrupted centrally by the inlet conduits 44 for the processing fluid; the distance between the panels 43 and the load-bearing structure 36 defining extraction conduits 47a, communicating with the chamber 2 through apertures 42.

The panels 43 may also be continuous, it being envisaged that in this case the fluid inlet conduits 48 be mounted on the faces of panels themselves; the cavities 47 acting as extraction conduits for the fluid being defined between panels 43 and each load-bearing wall 36. Alternatively, externally-mounted conduits 49 may be provided for both fluid introduction and extraction.

The conduits 44, 48, 49 being fitted with truncated cone or truncated pyramid diffusers 50 together constituting a plurality of longitudinal apertures for the passage of the processing fluid.

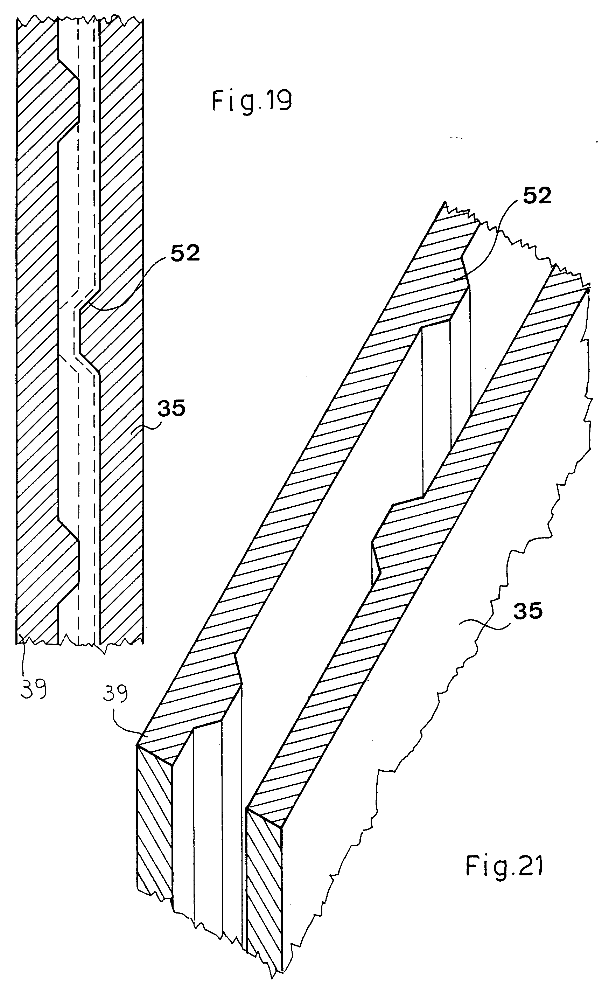

The figures also show: 51, possible sleeve bushes in the panels 39 loosely coupled to the ties 37; 52, elastic elements lying on substantially vertical planes, serving to straighten the fluid threads and direct them towards the floor or ceiling during extraction and introduction, placed between the panels 35 and the flat sections of the corner connecting elements 31 or of the intermediate panels 39 facing the longitudinal apertures 33: said elements consisting for example of flexible prismatic blades glued or fixed in some way to the panels themselves, or protruding from the surface of a belt of elastic material; alternatively, (Figure 19) the straightening elements, flexible or not, consisting of staggered projections on the opposing surfaces of the relative panels 35, 31 facing one another to induce losses of momentum in the longitudinal flow of the fluid by directing the fluid threads towards the floor or ceiling: said projections similarly being an integral part of or in some way fixed to the relative panels.

The cavities 16 may be fitted internally with tubes 53 advantageously extending for the whole length of the cavities themselves for the spraying of detergent liquid through atomizer nozzles 54 against the internal walls of the cavities.

The longitudinal baffle plates 18 being fixed to the wall 36 by threaded ties 37, with the insertion of soft gaskets 55: the heads of the ties being advantageously protected by covers 56 inserted in special grooves in the panel 35.

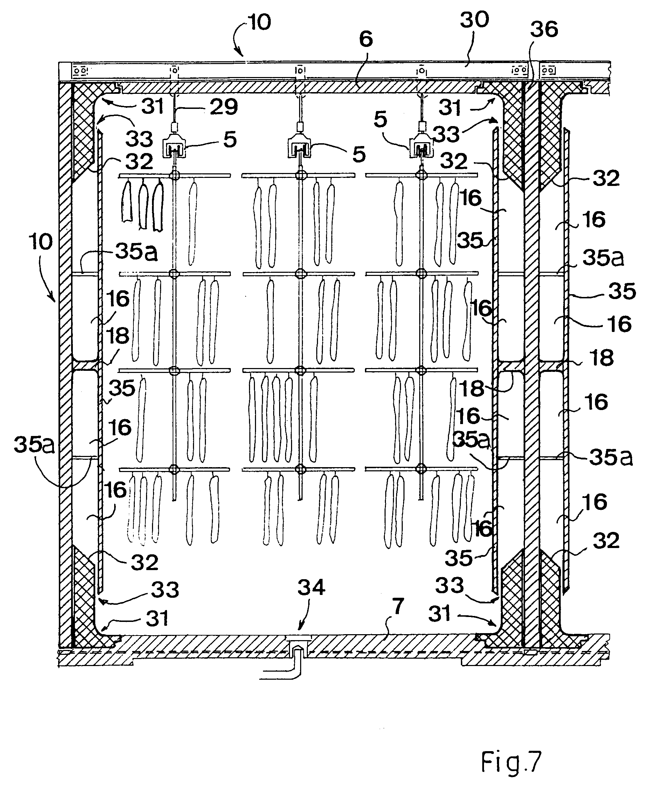

Operation is as follows: having filled the treatment chamber 2, after the eventual formation of a modular diaphragm by aligning the corresponding panels 26 with one of the baffles 25, the conditioner 12 is switched on to send the fluid under pressure through the conduits 13, 15, 15a and from these, through the gate valves 19, 23 alternately to the pair of upper and lower cavities 16; the extraction of the fluid may come about either through the pair of cavities not used for the introduction of the fluid, as in Figure 7, or through extraction conduits designed for this purpose, such as conduits 41, 47. Inversion of flow being triggered by a sequence timer controlled by means of the plant's microprocessor, not shown, or by means of an electric signal sent to the microprocessor itself by one or more probes 24 measuring, for example, the degree of humidity in the chamber 2; this taking preferably periods of about 1/2 an hour to about one hour for feeding the pair of lower cavities and from about 20 to 40 minutes for feeding the pair of upper cavities.

The flow rate to the cavity 16 of each pair being rendered variable by operating the distributor 14 so as to create a longitudinal stream 57 of fluid, substantially vertical in its central section and directed by extraction towards the input, obtained by the confluence of the two opposing flows being sent to the chamber through the input conduits, to affect a particular area of the chamber itself extending progressively from one side wall 10 to the opposite wall.

The output of processing fluid in the chambers according to the invention having to allow from 40 to 60 recyclings/hour, with a load density of the product to be treated of approximately 25 to 70 kg/m³.

The materials, dimensions and details of execution may be different from but technically equivalent to those described without departing from the juridical domain of the present invention.

## Claims

1. A plant for the treatment of products, in particular foodstuffs, comprising: a ventilated chamber (2), including opposite vertical walls (10) defining a space in which the products (3) to be treated are loaded for being exposed to a stream (57) of processing fluid; a conditioner (12) for conditioning the processing fluid; a plurality of conduits (13, 15, 16, 21, 40, 41) connected to said conditioner (12) for extraction and introduction of conditioned processing fluid in said chamber (2); a fluid flow distributor (14) for controlling the flow rate of said fluid through said conduits (15, 16, 40, 41); at least one pair of upper apertures (33, 42, 50 ) located at opposite upper ends of said vertical walls (10) and at least one pair of lower apertures (33, 42, 50) located at opposite lower ends of said vertical walls (10), each of said apertures being connected in fluid communication with said conduits (15, 16, 40, 41) for generating, at a flow rate which is controllable by said distributor (14), opposite fluid flows flowing together in said processing fluid stream, **characterized in that**
means (19, 23) are provided at said conduits (16, 21, 40, 41) to alternatively enable said upper and lower apertures (33, 42, 50) for either fluid introduction or extraction, whereby said fluid stream (57) is substantially vertical and with a reversible flow direction.

2. A plant, according to claim 1, characterized in that said means for the alternative enabling of said apertures (33, 42, 50) comprise gate valves (19, 23).

3. A plant, according to claim 2, characterized in that said side walls (10) have each a pair of cavities (16, 47) adapted to act as fluid extraction and introduction conduits, the cavities extending vertically from opposite sides of an intermediate baffle plate (18), a panel (35, 43), fixed to said baffle plate (18) defining in its central section together with the load-bearing wall (36) the width of said cavities, and at its end section the width of said upper and lower apertures (33, 42).

4. A plant, as claimed in claim 1, characterised in that, each side wall (10) of the treatment chamber (2) consists of a load-bearing wall (36) on which is face-mounted a pair of longitudinal conduits (49) one above the other extending close to the load-bearing wall for a substantial part of the relative development in height; said pair of apertures (50) being on the upper and lower end faces of each conduit.

5. A plant, as claimed in claim 1, characterised in that, each side wall (10) of the treatment chamber (2) consists of a load-bearing wall (36) on which is mounted a pair of central, longitudinal, inlet conduits (44) equipped with a pair of apertures (50) for the processing fluid on the upper and lower faces: a pair of longitudinal panels (43) extending from the floor and from the ceiling as far as said upper and lower faces to define the cavities (47a) having a pair of apertures (42) for the extraction of the processing fluid.

6. A plant, as claimed in claim 3, characterised in that, each cavity (16) is longitudinally subdivided by an intermediate baffle plate (39) into a central conduit (40) for the introduction of the processing fluid and a conduit (41) for the extraction of said fluid.

7. A plant, as claimed in one or more of the previous claims, characterised in that, the treatment chamber (2) is provided with connecting elements (31) between the side walls (10) and the floor (7) and/or the ceiling (6) with a concave internal surface co-operating with the air flow to deflect its trajectory substantially at right angles.

8. A plant, as claimed in claim 7, when dependent on claim 3, characterised in that, the vertical section of each said connecting element (31) is inserted in the relative cavity (16) and defines the terminal section converging outwards of the fluid extraction or inlet conduits.

9. A plant, as claimed in any of the previous claims, characterised in that, said cavities (16; 47; 47a) are closed at one of the longitudinal extremities, the other communicating, through said gate valves (19; 23), with the fluid-extraction or inlet conduits (13; 15; 15a; 21).

10. A plant, as claimed in any one of the claims from 1 to 8, characterised in that, said upper and lower apertures (33) are furnished with vertical fluid thread straightening elements (52; 55), co-operating with the facing surfaces of the baffles (39) or of the panels (35) defining the apertures themselves.

11. A plant, as claimed in claim 10, characterised in that, the straightening elements (52) are made of elastically deformable material so that they can be adapted to the various dimensions of the relative aperture (33).

12. A plant, as claimed in claim 10, characterised in that, the straightening elements consist of staggered, opposed projections (52) on the facing surfaces of the baffles (39) or of the panels (35) defining said upper and lower apertures (33).

13. A plant, as claimed in any one of the preceding claims, characterised in that, the longitudinal panels (35) are fixed to the load-bearing wall (36) by ties (37) which are adjustable in order to vary the width of said apertures (33).

14. A plant, as claimed in any one of the previous claims, characterised in that, in the chambers (2) for the treatment of products (3) are placed mobile conveyor frames (4), distributed in uniform formation throughout at least a part of the surface of the chamber; the conveyors (4) making up one of the outside rows of this uniform formation being furnished with panels (26), removably mounted on the said frames, the whole constituting, together with the fixed baffles (25) protruding from the ceiling, a transverse dividing wall of the treatment chamber.

15. A method for treating products, in particular foodstuffs, in the plant of claim 1, the method comprising:
- loading the products in the ventilated chamber (2);
- providing a processing fluid stream (57) in said chamber (2), the fluid stream (57) being obtainable from the confluence of opposite fluid flows generated by said at least one pair of upper apertures (33, 42, 50 ) located at opposite upper ends of said vertical walls (10) or by said at least one pair of lower apertures (33, 42, 50) located at opposite lower ends of said vertical walls (10), the flow rate of said opposite fluid flows being controllable through said distributor (14),
**characterized in that** it further comprises the step of:
- alternatively enabling by actuation of said alternative actuation means (19, 23), said upper and lower apertures (33, 42, 50) for either fluid introduction or extraction, whereby providing a said fluid stream (57) which is substantially vertical and with a reversible flow direction.

## Patentansprüche

1. Anlage zur Behandlung von Produkten, insbesondere von Lebensmitteln, mit: einer belüfteten Kammer (2), die sich gegenüberliegende, vertikal verlaufende Wände (10) hat, zwischen denen ein Raum festgelegt ist, in den die Produkte (3), die einer Behandlung unterzogen werden sollen, eingebracht werden, um dort einer Strömung (57) eines Fluids zur Behandlung ausgesetzt zu werden einem Vorbehandlungsapparat (12) zur Vorbehandlung des Fluids; einer Mehrzahl von Leitungen (13, 15, 16, 21, 40, 41), die an dem Vorbehandlungsapparat (12) angeschlossen sind, um das vorbehandelte Fluid zur Behandlung in die Kammer (2) zu leiten und aus der Kammer (2) abzuleiten; einem Fluidströmungsverteiler (14), der die Strömungsrate des Fluids durch die Leitungen (15, 16, 40, 41) kontrolliert; zumindest einem Paar von oberen Öffnungen (33) 42, 50), die an den oberen Enden von den sich gegenüberliegenden, vertikal verlaufenden Wänden (10) angeordnet sind, und mit zumindest einem Paar von unteren Öffnungen (33, 42, 50), die an der unteren Enden von den sich gegenüberliegenden, vertikal verlaufenden Wänden (10) angeordnet sind, wobei jede dieser Öffnungen in Fluidverbindung mit den Leitungen (15, 16, 40, 41) steht, um gegeneinander gerichtete Fluidströmungen zu erzeugen, die in der Strömung zur Behandlung zusammenströmen, wobei die Strömungsrate durch den Verteiler (14) kontrollierbar ist, **dadurch gekenzeichnet, daß**
eine Einrichtung (19, 23) an den Leitungen (16, 21, 40, 41) vorgesehen ist, die es ermöglicht, daß alternative die oberen oder die unteren Öffnungen (33, 42, 50) für entweder die Einleitung oder die Ableitung des Fluids dienen, wobei die Fluidströmung (57) im wesentlichen vertikal verläuft und eine umkehrbare Strömungsrichtung aufweist.

2. Anlage nach Anspruch 1, dadurch gekennzeichnet, daß die Einrichtung zum alternativen Einsatz der Öffnungen (33, 42, 50) Absperrschieber (19, 23) umfaßt.

3. Anlage nach Anspruch 2, dadurch gekennzeichnet, daß die Seitenwände (10) jeweils ein Paar von Hohlräumen (16, 47) aufweisen, die so ausgebildet sind, daß sie als Leitungen für die Ableitung und die Einleitung des Fluids dienen, wobei sich die Hohlräume vertikal erstrecken, von gegeüberliegenden Seiten einer zwischenliegenden Ablenkplatte (18), sowie eine Platte (35), die an der Ablenkplatte (18) befestigt ist, in ihrem mittleren Abschnitt gemeinsam mit der lastaufnehmenden Wand (36) die Breite der Hohlräume bestimmt, und an ihrem Endabschnitt die Weite der oberen und der unteren Öffnungen (33, 41) bestimmt.

4. Anlage nach Anspruch 1, dadurch gekennzeichnet, daß jede Seitenwand (10) der Kammer zur Behandlung (2) aus einer lastaufnehmenden Wand (36) besteht, an der ein Paar von länglichen Leitungen (49) flächig und übereinanderliegend montiert ist, die sich in der Nähe der lastaufnehmenden Wand über einen wesentlichen Teil der Höhe erstrecken; wobei das Paar von Öffnungen (50) an den oberen und den unteren Endflächen jeder beitung vorliegen.

5. Anlage nach Anspruch 1, dadurch gekennzeichnet, daß jede Seitenwand (10) der Kammer zur Behandlung (2) aus einer lastaufnehmenden Wand (36) besteht, an der ein Paar von mittigen, länglichen, Einlaßleitungen (44) montiert ist, die jeweils mit einem Paar von Öffnungen (50) versehen sind, um das Fluid zu den oberen und unteren Flächen zur Behandlung zuzuführen; wobei sich ein Paar von länglichen Platten (43) von dem Boden und von der Decke erstrecken bis zu dieser oberen und unteren Flächen, um die Hohlräume (47a) auszubilden, die ein Paar von Öffnungen (42) aufweisen, um das Fluid zur Behandlung abzuleiten.

6. Anlage nach Anspruch 3, dadurch gekennzeichnet, daß jeder Hohlraum (16) in der Längsrichtung durch eine mittige Ablankplatte (39) abgeteilt ist, nämlich in eine mittige Leitung (40) zur Einleitung des Fluids zur Behandlung und in eine Leitung (41) zum Abführen dieses Fluids.

7. Anlage nach einem oder mehreren der vorhergehenden Ansprüche, dadurch gekennzeichnet, daß die Kammer zur Behandlung (2) mit Verbindungselementen (31) ausgestattet ist, die sich zwischen den Seitenwänden (10) befinden, sowie der Boden (7) und/oder die Decke (6) mit einer konkaven Innenfläche versehen sind, die mit der Luftströmung zusammenwirkt, um den Strömungsweg im wesentlichen um 90° abzulenken.

8. Anlage nach Anspruch 7, falls von Anspruch 3 abhängig, dadurch gekennzeichnet, daß der vertikale Abschnitt jedes Verbindungselementes (31) in den jeweiligen Hohlraum (16) eingesetzt ist und daß dieser den Anschlußabschnitt festlegt, der sich in Richtung nach außerhalb der Leitungen zum Ableiten oder Einleiten des Fluids verjüngt.

9. Anlage nach einem oder mehreren der vorhergehenden Ansprüche, dadurch gekennzeichnet, daß die Hohlräume (16; 47; 47a) an einem der Längsenden verschlossen sind, während das andere Langsende mittels der Absperrventile (19; 23) mit den Leitungen (13; 15; 15a; 21) zum Ableiten oder Einleiten des Fluids in Verbindung stehen.

10. Anlage nach einem der Ansprüche 1 bis 8, dadurch gekennzeichnet, daß die oberen und die unteren Öffnungen (33) mit Elementen (52; 55) ausgestattet sind, die die vertikal ausgerichtete Fluidströmung geradeausleiten und die mit den gegenüberliegenden Oberflächen der Ablenkplatten (39) oder der Platten (35) zusammenwirken, die die Öffnungen selbst ausbilden.

11. Anlage nach Anspruch 10, dadurch gekennzeichnet, daß diese Elemente (52) aus einem elastischen, verformbaren Material bestehen, so daß sie an die verschiedenen Abmessungen der jeweiligen Öffnung (33), angepaßt werden können.

12. Anlage nach Anspruch 10, dadurch gekennzeichnet, daß diese Elemente aus versetzten, sich gegenüberliegenden Vorsprüngen (52) an den gegenüberliegenden Oberflächen der Ablenkplatten (39) oder der Platten (35) bestehen, die die oberen und die unteren Öffnungen (33) ausbilden.

13. Anlage nach einem oder mehreren der vorhergehenden Ansprüche, dadurch gekennzeichnet, daß die längs verlaufenden Platten (35) durch Verbinder (37) an der lastaufnehmenden Wand (36) befestigt sind, wobei die Verbinder (37) einstellbar sind, um die Weite der Öffnungen (33) zu verändern.

14. Anlage nach einem oder mehreren der vorhergehenden Ansprüche, dadurch gekennzeichnet, daß in die Kammern (2) zur Behandlung der Produkte (3) bewegliche Förderrahmen (4) eingesetzt sind, die gleichmäßig verteilt sind, und zwar über zumindest einen Teil der Fläche der Kammer; wobei die Förderer (4), die eine der Außenreihen dieser gleichmäßigen Formation bilden, mit Platten (26) versehen sind, die abnehmbar an den Rahmen montiert sind, wobei diese gesamte Anordnung, zusammen mit den feststehenden Ablenkplatten (25), die von der Decke vorstehen, eine quer angeordnete Teilungswand in der Behandlungskammer ausbildet.

15. Verfahren zur Behandlung von Produkter insbesondere von Lebensmitteln, in einer Anlage nach Anspruch 1, wobei das Verfahren die folgenden Schritte umfaßt:
- Einbringen der Produkte in die belüftete Kammer (2);
- Vorsehen einer Fluidströmung (57) zur Behandlung in dieser Kammer (2), wobei die Fluidstömung {57) aus dem Zusammenwirken gegeneinander gerichteter Fluidströmungen resultiert, die von dem zumindest einen Paar von oberen Öffnungen (33, 42, 50) erzeugt werden, die an den oberen Enden der vertikal angeordneten Wände (10) angeordnet sind oder die von dem zumindest einen Paar von unteren Öffnungen (33, 42, 50) erzeugt werden, die an den unteren Enden der vertikal angeordneten Wände (10) angeordnet sind, wobei die Strömungsraten der gegeneinander gerichteten Fluidströmungen durch den Verteiler (14) kontrollierbar sind, **dadurch gekennzeichnet, daß** zudem die folgenden Schritte vorgesehen sind:
- alternative Betätigung der oberen und der unteren Öffnungen (33, 42, 50) mittels der Betätigungseinrichtung (19, 23), um entweder die Einleitung oder die Ableitung des Fluids zu bewirken, wobei die Fluidströmung (57) vorgesehen wird, die im wesentlichen vertikal verläuft und eine umkehrbare Strömungsrichtung aufweist.

## Revendications

1. Installation pour le traitement de produits, en particulier des produits alimentaires, comprenant : une chambre ventilée (2) comportant des parois verticales opposées (10) qui définissent un espace dans lequel on charge les produits à traiter (3) pour les exposer à un courant (57) de fluide de traitement ; un conditionneur (12) pour conditionner le fluide de traitement ; une pluralité de conduits (13,15,16,21,40,41) connectés audit conditionneur (12) pour l'extraction et l'introduction de fluide de traitement conditionné dans ladite chambre (2) ; un distributeur d'écoulement de fluide (14) pour régler le débit dudit fluide dans lesdits conduits (15,16,40,41) ; au moins une paire d'ouvertures supérieures (33, 42,50) situées aux extrémités supérieures opposées desdites parois verticales (10) et au moins une paire d'ouvertures inférieures (33,42,50) situées aux extrémités inférieures opposées desdites parois verticales (10), chacune desdites ouvertures étant connectée en communication de fluide avec lesdits conduits (15,16,40,41) pour engendrer, à un débit qui est réglable par ledit distributeur (14), des flux de fluide opposés qui s'écoulent ensemble dans ledit courant de fluide de traitement, caractérisée en ce que des moyens (19,23) sont prévus dans lesdits conduits (16,21,40,41) afin d'activer alternativement lesdites ouvertures supérieures et inférieures (33, 42,50) pour l'introduction ou l'extraction de fluide, de sorte que ledit courant de fluide (57) est sensiblement vertical et a une direction d'écoulement réversible.

2. Installation selon la revendication 1, caractérisée en ce que lesdits moyens pour l'activation alternative desdites ouvertures (33,42,50) comprennent des vannes à coin (19,23).

3. Installation selon la revendication 2, caractérisée en ce que lesdites parois latérales (10) comportent chacune une paire de cavités (16,47) agencées de manière à agir comme conduits d'extraction et d'introduction de fluide, les cavités s'étendant verticalement à partir des côtés opposés d'une plaque de chicane intermédiaire (18), un panneau (35,43), fixé à ladite plaque de chicane (18), définissant dans sa partie centrale en association avec la paroi de soutènement (36) la largeur desdites cavités, et, dans sa partie d'extrémité, la largeur desdites ouvertures supérieures et inférieures (33,42).

4. Installation selon la revendication 1, caractérisée en ce que chaque paroi latérale (10) de la chambre de traitement (2) consiste en une paroi de soutènement (36) sur laquelle sont montés de face deux conduits longitudinaux (49) l'un au-dessus de l'autre et s'étendant près de la paroi de soutènement sur une partie importante du développement relatif en hauteur, ladite paire d'ouvertures (50) étant située sur les faces d'extrémité supérieure et inférieure de chaque conduit.

5. Installation selon la revendication 1, caractérisée en ce que chaque paroi latérale (10) de la chambre de traitement (2) consiste en une paroi de soutènement (36) sur laquelle sont montés deux conduits d'entrée longitudinaux centraux (44) comportant une paire d'ouvertures (50) pour le fluide de traitement sur les faces supérieures et inférieures, une paire de panneaux longitudinaux (43) s'étendant à partir du plancher et du plafond jusqu'auxdites faces supérieures et inférieures de manière à définir les cavités (47a) comportant une paire d'ouvertures (42) pour l'extraction du fluide de traitement.

6. Installation selon la revendication 3, caractérisée en ce que chaque cavité (16) est longitudinalement subdivisée par une plaque de chicane intermédiaire (39) en un conduit central (40) pour l'introduction du fluide de traitement et un conduit (41) pour l'extraction dudit fluide.

7. Installation selon une ou plusieurs des revendications précédentes, caractérisée en ce que la chambre de traitement (2) est pourvue d'éléments de connexion (31) entre les parois latérales (10) et le plancher (7) et/ou le plafond (6), ayant une surface interne concave qui coopère avec le flux d'air pour dévier sa trajectoire sensiblement à angle droit.

8. Installation selon la revendication 7, lorsqu'elle dépend de la revendication 3, caractérisée en ce que la section terminale de chaquedit élément de connexion (31) est insérée dans la cavité correspondante (16) et définit la section terminale convergeant vers l'extérieur des conduits d'extraction ou d'entrée de fluide.

9. Installation selon une quelconque des revendications précédentes, caractérisée en ce que lesdites cavités (16;47;47a) sont fermées à une des extrémités longitudinales, l'autre communiquant par l'intermédiaire desdites vannes a coin (19;23) avec les conduits d'extraction ou d'entrée de fluide (13;15;15a;21).

10. Installation selon une quelconque des revendications 1 à 8, caractérisée en ce que lesdites ouvertures supérieures et inférieures (33) sont munies d'éléments verticaux de redressement des filets de fluide (52;55), qui coopèrent avec les surfaces des chicanes (39) ou des panneaux (35) en regard définissant les ouvertures elles-mêmes.

11. Installation selon la revendication 10, caractérisée en ce que les éléments de redressement (52) sont en une matière élastiquement déformable de sorte qu'on peut les adapter aux dimensions variables de l'ouverture correspondante (33).

12. Installation selon la revendication 10, caractérisée en ce que les éléments de redressement consistent en saillies opposées quinconcées(52) sur les surfaces en regard des chicanes (39) ou des panneaux (35) définissant lesdites ouvertures supérieures et inférieures (33).

13. Installation selon une quelconque des revendications précédentes, caractérisée en ce que les panneaux longitudinaux (35) sont fixés à la paroi de soutènement, (36) par des entretoises (37) qui sont réglables afin de modifier la largeur desdites ouvertures (33).

14. Installation selon une quelconque des revendications précédentes, caractérisée en ce que, dans les chambres (2) pour le traitement des produits (3), sont placés des châssis de convoyeurs mobiles (4), répartis en formation uniforme sur au moins une partie de la surface de la chambre, les convoyeurs (4) constituant une des rangées extérieures de cette formation uniforme étant munis de panneaux (26) montés de façon amovible sur lesdits châssis, l'ensemble constituant, en association avec les chicanes fixes (25) s'étendant à partir du plafond, une paroi transversale de division de la chambre de traitement.

15. Procédé pour le traitement de produits, en particulier de produits alimentaires, dans l'installation selon la revendication 1, le procédé comprenant :
le chargement des produits dans la chambre ventilée (2) ; la création d'un courant de fluide de traite
ment (57) dans ladite chambre (2), le courant de fluide (57) pouvant être obtenu par la confluence d'écoulements de fluide opposés engendrés par ladite au moins une paire d'ouvertures supérieures (33,42,50) situées aux extrémités supérieures opposées desdites parois verticales (10) ou par ladite au moins une paire d'ouvertures inférieures (33,42,50) situées aux extrémités inférieures opposées desdites parois verticales (10), le débit desdits écoulements de fluide opposés étant réglable au moyen dudit distributeur (14),
caractérisé en ce qu'il comprend en outre l'étape de :
activation alternativement, par manoeuvre des dits moyens d'activation alternative (19,23), desdites ouvertures supérieures et inférieures (33,42,50) pour l'introduction ou l'extraction de fluide, de façon à créer undit courant de fluide (57) qui est sensiblement vertical et qui a une direction d'écoulement réversible.
